# EUROPEAN PATENT APPLICATION

(11) **EP 2 913 182 A1**
(43) Date of publication of application: **02.09.2015**
(21) Application number: 15155901.0
(22) Date of filing: 20.02.2015
(51) Int. Cl.: B29D 30/26, B29D 30/24

(54) **Transfer ring or drum apparatus with adjustable circumference**

(30) Priority: 27.02.2014 US 201414192017
(71) Applicant: The Goodyear Tire & Rubber Company, Akron, Ohio 44316 (US)
(72) Inventor: Currie, William Dudley, Stow, OH Ohio 44224 (US); Burg, Gary Robert, Massillon, OH Ohio 44646 (US); Anderson, John Edward, Atwater, OH Ohio 44201 (US)
(74) Representative: Kutsch, Bernd

(57) **Abstract**

An apparatus for use in the manufacture of a pneumatic tire is disclosed. The apparatus comprises a longitudinal axis and a plurality of arcuate segments (28) defining an arc of a cylindrical surface such that the arcuate segments collectively define the cylindrical surface and the arcuate segments (289 are supported for movement radially relative to the longitudinal axis for adjusting the circumference of the cylindrical surface. Each arcuate segment includes at least one of two side sections of each arcuate segment having a row of spaced fingers (56) corresponding in a fitted arrangement with gaps of an adjacent arcuate segment such that, as the circumference is adjusted and the side sections of each segment hingedly move relative to an intermediate section about a corresponding pivot axis, the fingers move into and out of the gaps provided between the fingers of the adjacent arcuate segment. The fingers (56) and gaps are both tapered at a taper angle relative to the circumferential direction of the apparatus.

## Description

### Field of the Invention

The present invention relates to devices for making pneumatic tires and relates, more particularly, to an apparatus defining an outer circumference suitable to serve as a forming surface or to grasp an inner circumference of a toroidal object, such as a pneumatic tire, or as an inner circumference to serve to grasp the outer circumference of a toroidal, circular, tubular, or round object. More specifically, the present invention relates to an improved belt and tread (B&T) drum or an improved transfer ring, useful in the manufacture of pneumatic tires.

### Background of the Invention

The manufacture of a pneumatic tire conventionally includes steps of forming a tire carcass, forming a belt package, and forming a tread portion of the pneumatic tire separate from the carcass, and thereafter securing the belt package and tread portion of the pneumatic tire to the carcass to form a "green", or uncured, tire. The green tire may thereafter be treated to form the tread and various other features of the pneumatic tire. Other supplementary steps, such as stitching, may be performed during the course of, or following, one or more of the aforementioned steps.

Formation of the belt package and tread portion of the pneumatic tire may be accomplished on a B&T drum. Such a drum may have an outer cylindrical surface, or circumference, about which one or more layers of tire belt material (comprising, for example, reinforcement cords embedded in a polymeric binder) are laid, and subsequent to the laying down of the tire belt material, the belt material is overlaid with one or more layers of strip tread material to comprise a B&T package.

The B&T drum may be rotatably mounted about a central longitudinal axis, and the several layers that make up the B&T package may be laid onto the drum as it is rotated. The circumference of such a drum may be capable of expanding and contracting to, for example, accommodate the removal of a completed package (which may be nonexpandable radially) from the drum circumference and to enable a single drum to be used to form B&T packages of alternative diameters. The circumference of such a B&T drum may be comprised of a plurality of rigid arcuate segments wherein each segment provides an arc of the cylindrical surface and is mounted for movement radially toward and away from the longitudinal axis of the B&T drum to accommodate adjustment in drum circumference. Furthermore, each segment may be provided with a plurality of fingers which cooperate with, or mate with, the fingers provided in an adjacent segment so that, as the circumference of the drum is expanded and contracted, the cooperating fingers render the perimeter of the cylindrical surface continuous.

In the manufacture of the pneumatic tire, the carcass may be formed on a carcass drum in a manner somewhat similar to the forming of a B&T package so that the carcass drum may also employ the concepts of the present invention. Further, after the carcass has been formed, it may be transferred to a second stage drum and held thereon while a B&T package is transferred from the B&T drum onto the outer circumference of the carcass by employing a transfer ring. Thereafter the B&T package may be attached to the carcass. The transfer ring may comprise an inverted B&T drum. That is, whereas the outer circumference of the B&T drum is adjustable to accommodate the formation of the B&T package thereon and to permit the removal therefrom of a completed B&T package, the inner circumference of the transfer ring may be adjustable to permit the ring to encompass the outer circumference of the B&T package and contract in diameter to cause the segments of the transfer ring to engage and grasp the B&T package for transferring of the B&T package to the carcass of the pneumatic tire.

It follows, however, that the radius of curvature of the B&T drum's outer cylindrical surface or the transfer ring's inner circumference, defined by their respective accurate segments, may be each fixed by the rigidity of the segments, thus rendering it unlikely for the segments to be moved between two radial positions and collectively provide perfectly-formed cylindrical surfaces at each of the two positions. If, for example, the circumference of the B&T drum is adjusted to a size at which the segments are positioned at a predetermined distance from the longitudinal axis which exceeds the radius of curvature of each segment arc, there will exist, transitional regions, or "spots", about the B&T drum circumference where the surface is relatively flat, thus rendering the drum out-of-round. If these flat transitional regions are large enough (as is likely in the case when the B&T drum is expanded to accommodate a tire of relatively large diameter), the B&T drum is likely to produce undesirable "flat-spotting" effects on a pneumatic tire constructed with the B&T drum. These flat spotting effects are a consequence of the severity of radial runout during the construction of a tire component upon the B&T drum. Such flat-spotting effects are undesirable in that they are known to adversely affect tire performance. The size, and thus the effects, of these flat spots may be reduced by increasing the number of segments about the B&T drum circumference to thereby provide a greater number of segments through a given arc of the cylindrical surface. However, the mechanical structure mounted internal to the B&T drum supporting the segments for movement radially of the B&T drum may prevent the increase in the number of segments beyond a practical limit. Flat-spotting may also be associated with transfer rings in that the newly-formed B&T package may be sensitive to deformation by contact with the segments of the transfer ring and the flat spots may be "imprinted" into the outer circumference of the B&T package. These imprints may show up later as irregularities in a finished tire.

### Summary of the Invention

The invention relates to an apparatus in accordance with claim 1.

Dependent claims refer to preferred embodiments of the invention.

In a preferred aspect, the present invention provides an improved B&T drum wherein flat-spotting effects produced with the B&T drum are substantially reduced. The present invention further provides a B&T drum wherein the severity of the out-of-round condition of the B&T drum when its circumferential surface is expanded to relatively large diameters is appreciably lessened. The present invention still further provides a B&T drum with circumference-providing segments which are uncomplicated in construction and effective in operation. The present invention yet further provides a device for grasping the outer diameter of a tire component with reduced flat-spotting tendencies. The present invention still further provides a multi-segmented expandable/collapsible apparatus for grasping the inner diameter or the outer diameter of circular or ring-type objects which are sensitive to alteration of their diameter by reason of flat-spotting of their diameter when grasped. The present invention yet further provides a multi-segmented transfer ring for use in the manufacture of pneumatic tires.

A first preferred apparatus in accordance with the present invention defines a variable circumference for building a pneumatic tire. The first apparatus includes a cylindrical frame having a central axis of rotation and a plurality of multi-sectional arcuate segments mounted to the frame in side-by-side relationship about the central axis thereof. The arcuate segments are radially movable inwardly and outwardly with respect to the central axis of the frame. The arcuate segments include arcuate surfaces which move toward one another when the arcuate segments are moved radially inwardly and away from one another when the arcuate segments are moved radially outwardly to collectively define a circumference. Each arcuate segment includes an intermediate section and circumferentially adjacent first and second side sections flanking the intermediate section on respective ones of the opposite sides thereof. Each of the first and second side sections are pivotally mounted to the frame for hinged movement of each side section with respect to the corresponding intermediate section. Opposite ends of the intermediate section of a first arcuate segment are secured by guide structures. A guide structure at one end of the intermediate section extends therefrom in the direction of a side section of a second arcuate segment adjacent to the first arcuate segment. A guide structure on the opposite end of the intermediate section extends therefrom in the direction of a side section of a third arcuate segment adjacent to the opposite side of the intermediate section. Radial movement of the intermediate section of the first arcuate segment is converted into hinged movement of the side sections of second and third arcuate segments. At least one of the two side sections of each arcuate segment have a row of spaced fingers corresponding in a fitted arrangement with gaps of an adjacent arcuate segment such that, as the circumference is adjusted and the side sections of each segment hingedly move relative to the intermediate section about a corresponding pivot axis, the fingers move into and out of the gaps provided between the fingers of the adjacent arcuate segment. The fingers and gaps both are tapered at a taper angle relative to the circumferential direction of the apparatus.

According to a preferred aspect of the first apparatus, each of the guide structures includes a curved surface thereon and a pin means slidably engaging the curved surface of a respective guide structure, the curved surface being of a selected curvature which causes the side sections to pivot about their respective hinged mountings as the arcuate segments move toward or away from one another during radial movement thereof.

A second preferred apparatus in accordance with the present invention is used in the manufacture of a pneumatic tire. The second apparatus includes a longitudinal axis and a plurality of arcuate segments defining an arc of a cylindrical surface such that the arcuate segments collectively define the cylindrical surface and the arcuate segments are supported for movement radially relative to the longitudinal axis for adjusting the circumference of the cylindrical surface. Each arcuate segment includes at least one of two side sections of each arcuate segment having a row of spaced fingers corresponding in a fitted arrangement with gaps of an adjacent arcuate segment such that, as the circumference is adjusted and the side sections of each segment hingedly move relative to an intermediate section about a corresponding pivot axis, the fingers move into and out of the gaps provided between the fingers of the adjacent arcuate segment. The fingers and gaps both are tapered at a taper angle relative to the circumferential direction of the second apparatus.

According to a preferred aspect of the second apparatus, one section of each arcuate segment includes a slot and a pin. The slot slidably receives the pin such that, as the arcuate segments are moved radially relative to the longitudinal axis of the second apparatus, the movement of the one section of an adjacent arcuate segment is coordinated with movement of the pin and slot.

According to a preferred aspect of the invention, the arcuate segments are constructed of aluminum.

According to a preferred aspect of the invention, the taper angle is between 10°and 40°.

According to a preferred aspect of the invention, the taper angle is between 20°and 30°.

According to a preferred aspect of the invention, the taper angle is between 10°and 20°.

According to a preferred aspect of the invention, the taper angle is between 30°and 40°.

According to a preferred aspect of the invention, magnets may facilitate tire building operations on the apparatus.

### Brief Description of the Drawings

The above and further features of examples of the present invention may be best understood with reference to the following detailed description and the drawings, in which:
FIG. 1 schematically represents a radially inward view of an example arcuate segment in accordance with the present invention.
FIG. 2 schematically represents a radially inward view of three adjacent arcuate segments in accordance with the present invention.
FIG. 3 is a side view of an example tire building machine for use with a B&T drum in accordance with the present invention;
FIG. 4 is a schematic perspective view of the B&T drum of FIG. 3;
FIG. 5 is a schematic side view of the B&T drum of FIG. 3 depicting the circumference of the drum in an unexpanded condition;
FIG. 6 is a schematic view similar to that of FIG. 5 depicting the circumference of the drum in an expanded condition;
FIG. 7 is a schematic fragmentary side view, shown partly in section, of the B&T drum of FIG. 4 illustrating the means by which the circumference of the drum may be expanded/contracted;
FIG. 8 is a schematic exploded perspective view of the example arcuate segment of FIG. 5;
FIG. 9 is a schematic plan view of sections of the segment of FIG. 8;
FIG. 10 is a schematic end elevation view of the segment of FIG. 8;
FIG. 11 is a schematic end view of the segment of FIG. 8 in an assembled condition;
FIG. 12 is a schematic side elevational view of a guide plate of the segment of FIG. 8;
FIG. 13 is a schematic end elevational view of a fragment of the B&T drum of FIG. 4 showing the relationship of adjacent segments and guide plates when the circumference of the B&T drum is expanded/contracted;
FIG. 14 is a schematic radial cross sectional view of a fragment of the B&T drum of FIG. 4;
FIG. 15 is a schematic view similar to that of FIG. 14 of a fragment of another example B&T drum;
FIG. 16 is a schematic side elevation view of an example transfer ring for use with the present invention with a minimized inner diameter;
FIG. 17 is a schematic side elevation view of the example transfer ring of FIG. 16 with a maximized inner diameter;
FIG. 18 is a schematic partial perspective view of multi-sectional arcuate segments of the example transfer ring of FIG. 16 in a thirty percent expanded condition;
FIG. 19 is a schematic top plan view depicting another example arcuate segment for use with the present invention; and
FIG. 20 is a schematic end view of the bottom side section of the segment of FIG. 19.

### Detailed Description of Example Embodiments of the Present Invention

One example B&T drum may provide a framework for mounting a plurality of multi-sectional segments that collectively define the circumference of the B&T drum and a central axis for the B&T drum. The circumference may act as a forming surface (as in the build-up of a B&T package for a pneumatic tire), or may grasp an inner circumference or an outer circumference of a circular, tubular, or round object (such as a transfer ring) and in which the multi-sectional segments are each arcuate in cross section to cooperatively define the circumference. Each multi-sectional segment may include an intermediate section mounted for radial movement inwardly and outwardly, relative to the central axis of the B&T drum; and flanking side sections hingedly mounted to the intermediate section on opposite sides thereof for relative hinged movement with respect to the intermediate section such that the assembled cross section of the multi-sectional segment may closely approximate a true circular circumference over an entire range of radial movement of the intermediate section, thereby materially reducing flat spots between adjacent segments.

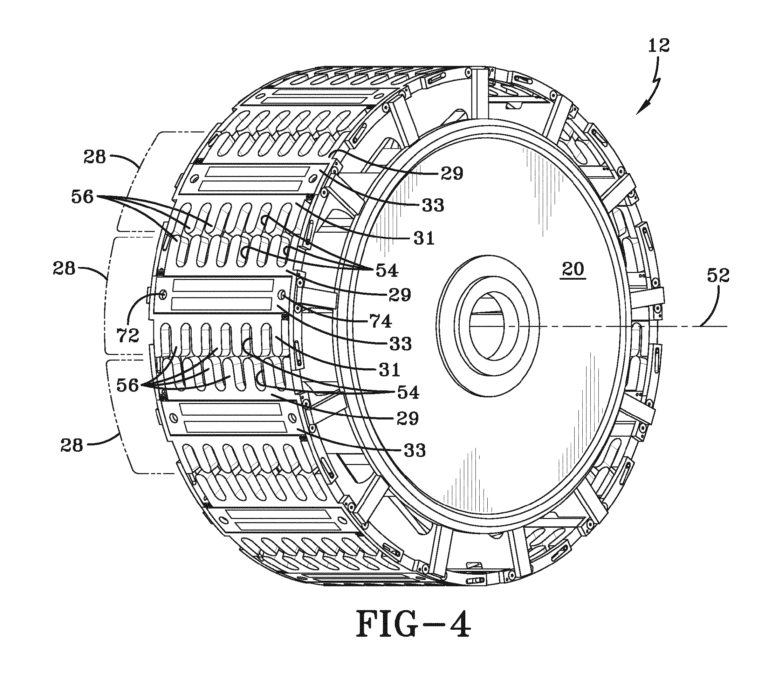

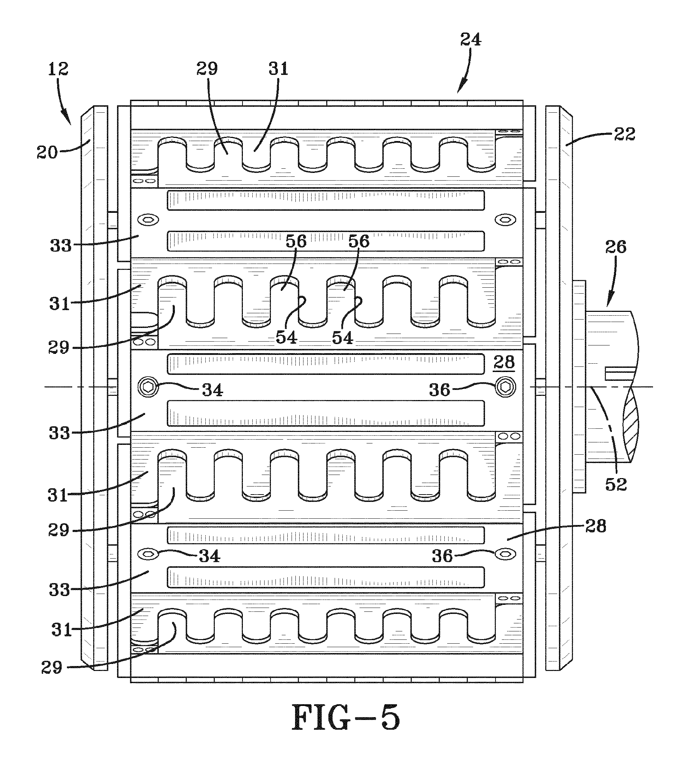

As an example, three sections per segment may be provided, an intermediate section and two flanking side sections. The flanking side sections may be aligned parallel and in side-by-side relationship with the intermediate section, which may move radially inward and outward as the circumference defined by the several segments is expanded or contracted. The intermediate section may be flanked on opposite sides by the two flanking side sections, which are circumferentially adjacent the intermediate section as depicted in FIGS. 4 and 5, for example. Pin means may be provided at opposite ends of each of the two flanking side sections for hingedly connecting each of the flanking side sections to a respective side edge of the corresponding intermediate section thereby rendering the flanking side sections radially fixed to the intermediate section, but permitting the hinged movement of the flanking side sections about the pin means in response to the guiding thereof by the guide means as further described herein.

Interconnecting means may be provided for connecting the side sections of a first segment with respective side sections of adjacent segments with the opposite sides of the first segment creating radial movement of the intermediate sections of adjacent segments results in guided hinged movement of the several respective side sections, relative to their respective intermediate sections, thereby reducing the extent of nonuniformity or flat spotting of the circumference defined by the B&T drum. This interconnection may include a guide member fixedly mounted to an end of an intermediate section and extending laterally therefrom adjacent to an end portion of a side section of an adjacent segment. This guide member may be provided with means for slidably receiving a fixed pin or similar member fixedly mounted on the side section of the adjacent segment. Such receiving means may thereby guide the fixed pin and its accompanying section in a hinged movement relative to its corresponding intermediate section to which the guide member is attached as this intermediate section is moved radially inwardly or outwardly. A similar interconnecting arrangement may be provided on the opposite end of the intermediate section, but with the guide member extending from the first intermediate section to engage a pin means on the end of the adjacent side section of the adjacent segment.

In this manner, adjacent segments may be interconnected at their respective side sections such that as the intermediate sections of the segments are moved radially inwardly and outwardly, all side sections of the segments are guided in hinged movement about the pivot axis of their respective hinge mountings. Such a B&T drum may form a B&T package of a pneumatic tire with a longitudinal axis and a plurality of arcuate segments of the B&T drum each defining an arc of an outer cylindrical surface of the B&T drum so that the segments collectively define the outer cylindrical surface. The arcuate segments may be supported for rotational movement about a hinge axis parallel to the longitudinal axis of the B&T drum in order to accommodate an adjustment in the circumference of the cylindrical surface.

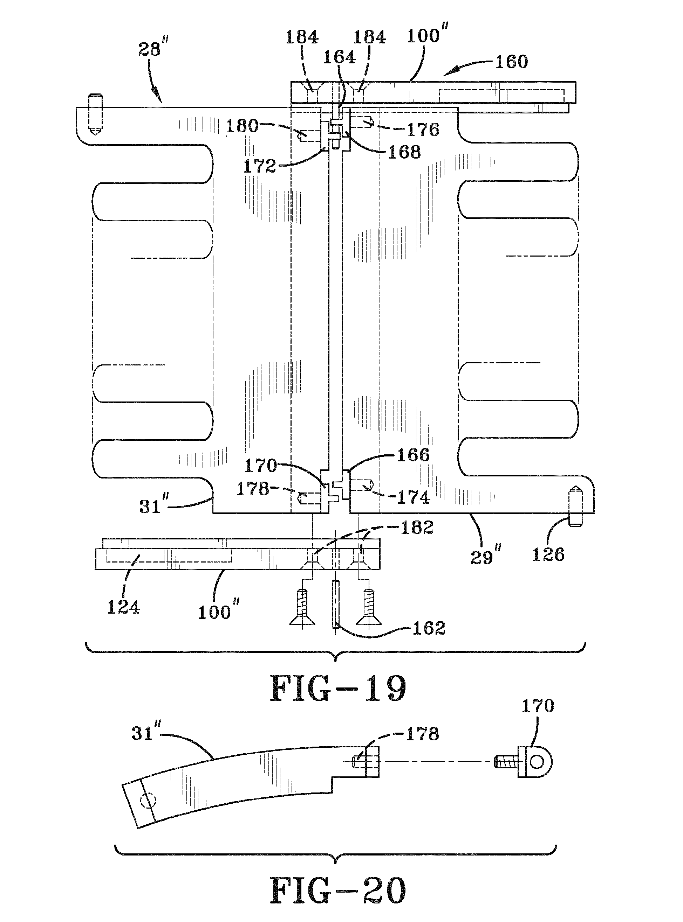

Each intermediate section may form a central hinge-mounting arrangement that is itself mounted to that part of the B&T drum which serves to adjust the inner and outer circumference defined by the plurality of segments. Two flanking segments may be associated with each central hinge-mounting arrangement. This hinge mounting (FIGS. 19 and 20) may include two hinge pins mounted adjacent the opposite ends of the segment and in longitudinal alignment with one another. These hinge pins allow the pivoting of the intermediate section of the three-section segment. Each section of the segment may define an arcuate portion of the desired cylindrical surface and the sections may hingedly rotate relative to one another about the common longitudinal axis of the hinge pin(s), this axis being oriented substantially parallel to the longitudinal axis of the B&T drum, for example. By this construction, each section of each segment may be guided in hinged movement relative to one another during an adjustment of the circumference. The size of the flat spots along the circumference at various positions of expansion may thus be substantially reduced.

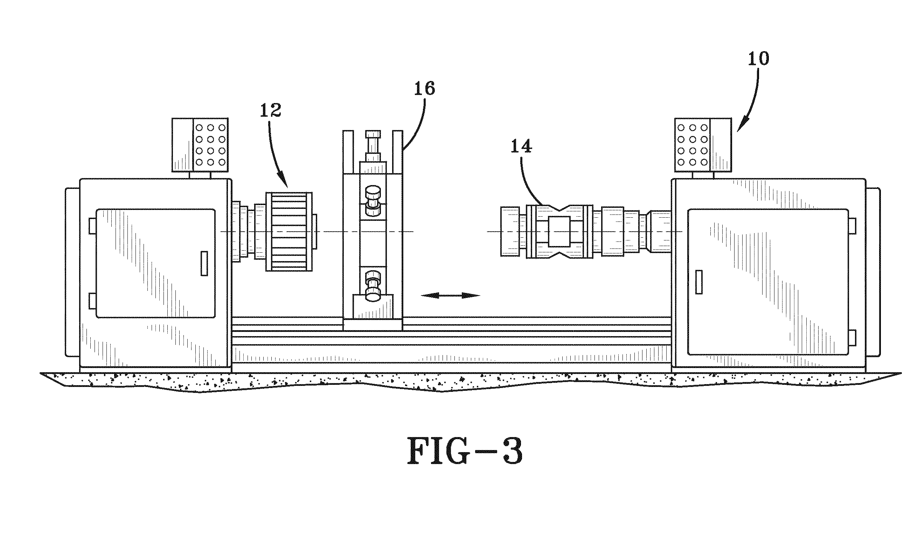

Referring now to the Figures in which like reference numerals indicate like or corresponding features, FIG. 3 shows a tire building machine 10 including a belt and tread (B&T) drum 12 within which features of the present invention may be implemented, a carcass or expander drum 14, and a transfer ring 16. Construction of a pneumatic tire may be effected in multiple stages. In a first stage, the carcass of the pneumatic tire may be formed 14. This carcass may comprise a sheet of polymeric material having embedded reinforcement cords and formed around two annular bead wires to form the flexible inner carcass of the pneumatic tire. In a second stage, a B&T package may be formed on the B&T drum 12.

The carcass formed in the first stage may be transferred to the carcass drum 14, which installs the beads on the carcass to form an airtight seal and inflates the carcass so that the outer diameter thereof is slightly less than the inner diameter of the B&T package. Once the first stage carcass is placed upon the carcass drum 14, the transfer ring 16 may be placed around the B&T package, and the B&T drum may be collapsed so that the B&T package is supported by the transfer ring 16. The transfer ring 16 then may transfer the B&T package to the carcass drum 14 and may position the B&T package around the outside circumference of the partially inflated carcass, which is already in position on the carcass drum 14. The carcass may then be further inflated to contact the inner circumference of the B&T package and allow the securing of the B&T package to the carcass.

The circumference of the B&T drum 12 may expand to various diameters to accommodate the build-up of B&T packages for pneumatic tires of different diameters, or sizes. Therefore, when pneumatic tires of various sizes are made on a single drum, the diameter of the circumference of the B&T drum 12 may be adjusted accordingly. Additionally, the B&T drum 12 may collapse from an expanded condition to permit removal of the B&T package and transfer to a subsequent stage of the tire construction process.

With reference to FIGS. 4-6, the B&T drum 12 may be generally of cylindrical shape, or geometry. The B&T drum 12 may include first and second flat disc-shaped end plates 20, 22, respectively, and a central body portion 24 disposed between the end plates 20, 22. The central body portion 24 may comprise a plurality of relatively movable components acting in concert to achieve a controlled and measured change in the outer circumference of the central body portion. Thus, the central body portion 24 may accommodate the manufacture of pneumatic tires of various sizes (e.g. tires of different diameters). Selection and control over the maximum circumference of the B&T drum 12 may be provided for externally adjusting the B&T drum by means of an adjustment mechanism 26.

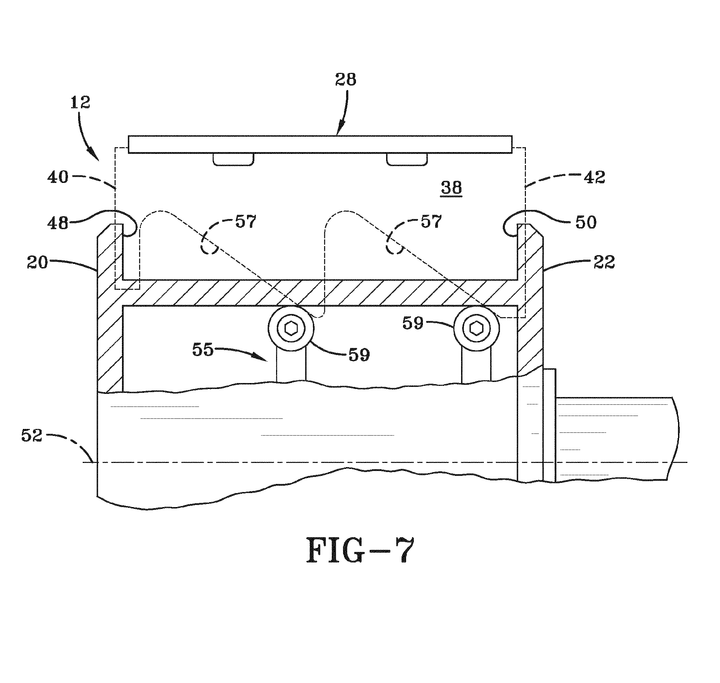

The central body portion 24 of the B&T drum 12 may include a plurality of circumference-defining, multi-sectioned segments 28 with outer arcuate surfaces collectively defining an arc or segment of the outer circumference of the B&T drum. Each segment 28 may be joined, as with bolts 34, 36, to a planar cam element 38 (FIG. 7) having two opposite side ends 40, 42 slidably received in radially-extending slots provided in the inner surfaces 48, 50 of the opposite end plates 20, 22. Mounted in the manner, the cam element 38 may move radially with respect to the rotational axis 52 of the B&T drum 12.

As shown in FIGS. 4-6, a plurality of the aforementioned circumference-defining, multi-sectioned segments 28 may be disposed about the circumference of the B&T drum 12 with a cumulative effect of defining the overall outer circumference of the B&T drum. As shown in FIGS. 5-7, each segment 28 of the B&T drum 12 may include a first side section 29, a second side section 31, and an intermediate section 33 disposed between the side sections 29, 31. Each side section 29 or 31 of each segment 28 may include a plurality of slots 54 along one of its longitudinal side margins. Defined between these slots 54 may be alternating fingers 56 for mating correspondingly within the slots 54 of the side section 29 or 31 of an adjacent segment 28.

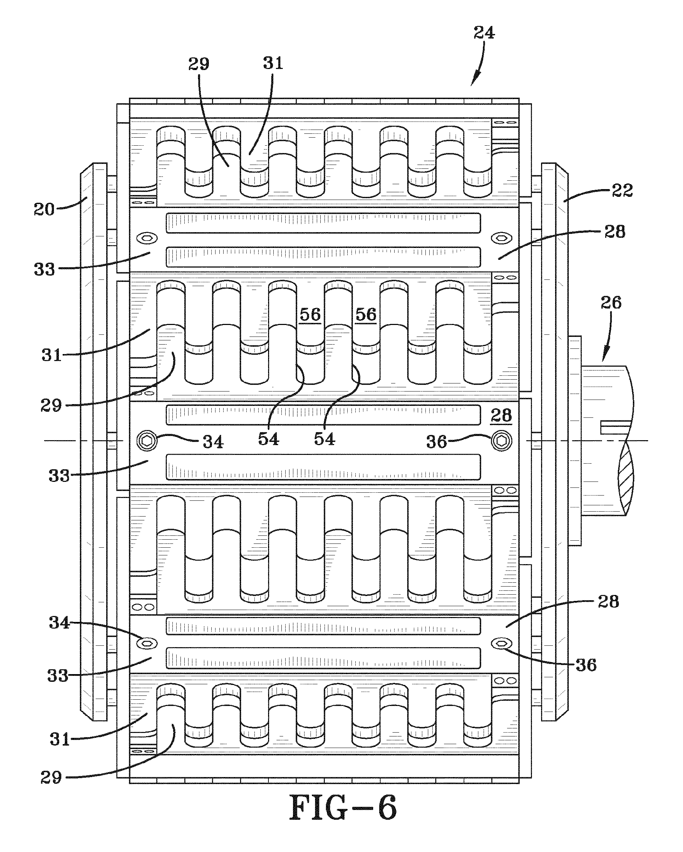

As shown in FIGS. 4 and 5, a segment 28 and fingers 56 of the side sections thereof may be fully received within respective mating slots 54 of adjacent segments 28. In this position of the segments 28, the circumference of the drum 12 is at its minimum value. In FIG. 6, the B&T drum 12 has a maximum expanded circumference with the fingers 56 of the several segments 28 being withdrawn or partially withdrawn from the slots 54 of respective adjacent segments 28.

In order to move the segments 28 radially toward and away from the longitudinal axis 52 of the B&T drum 12 and thereby alter the drum circumference, the B&T drum may include adjustment means, generally indicated 55 in FIG. 7, which cooperate with the cam elements 38 so that upon adjustment, the cam elements may slidably move along the slots 54 of the end plates 20, 22 between alternative positions and corresponding circumferences. Such adjustment means 55 are conventional and a detailed description of the adjustment means is not included herein. Each cam element 38 may include a contoured cam surface 57 and the adjustment means 55 may include roller cams 59 positioned in contact with the cam surfaces of the cam elements. Each roller cam 59 may move within the B&T drum 12 along a linear path oriented parallel to the longitudinal axis 52 of the B&T drum. Further, each cam element 38 may maintain contact with the surface of a corresponding roller cam 59 under the influence of a spring or similar structure (not shown). To effect an enlargement of the drum circumference, the roller cams 59 may move against the corresponding cam element 38 (in a rightwardly direction as viewed in FIG. 7) so that the roller cams roll along the corresponding cam surface 57 and so that the cam element and the segment 28 supported thereby move radially outwardly of the B&T drum 12 (and against the force of the spring) to an alternative position. To reduce the B&T drum circumference, the roller cams 59 may be withdrawn in a direction opposite the cam element 38 (in a leftwardly direction as viewed in FIG. 7) so that the cam element 38 (which is continuously maintained in contact with the corresponding roller cams 59) and the segment 28 supported thereby move radially inwardly of the B&T drum 12 (under the influence of the spring) to an alternative position.

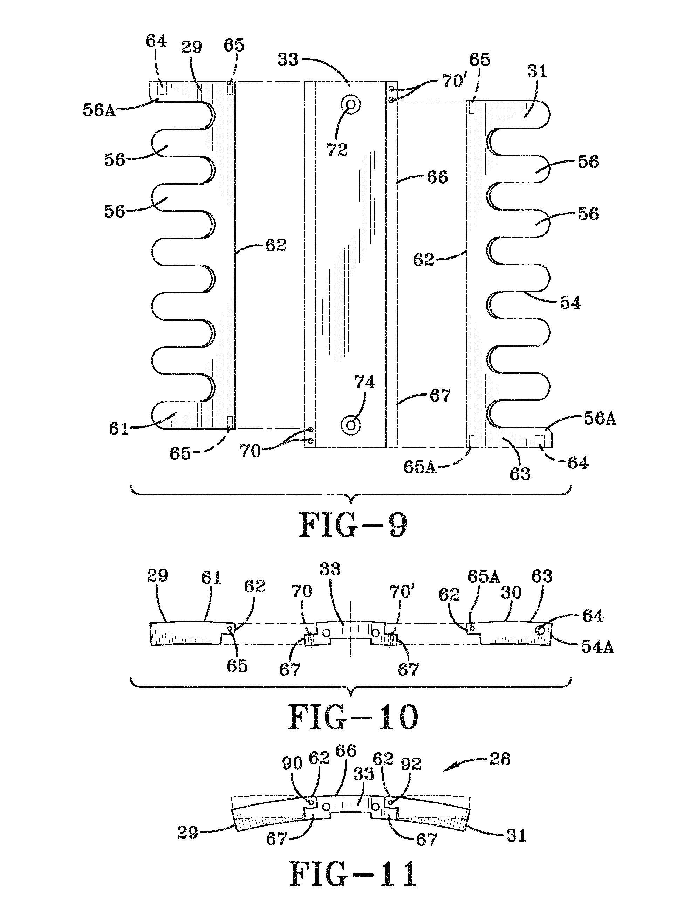

With reference to FIGS. 9 and 10, each side section 29, 31 may extend along almost the entire length of the B&T drum 12 and define an outer arcuate surface 61, 63. Each side section 29, 31 may include a stepped marginal edge opposite the fingers 56 and having a lip 62. Along the end surface of the outermost finger, indicated by 56A, of each side section 29 or 31, there may be a bore 64 and, in each end of the lip 62, a bore 65 or 65A for hingedly attaching the side section 29 or 31 to the intermediate section 33 in a manner described herein.

With reference still to FIGS. 9-11, the intermediate section 33 may extend along substantially the entire length of the B&T drum 12 and include an outer arcuate surface 66. Each intermediate section 33 may further include a stepped marginal surface extending along the sides thereof and including a lip 67. As depicted in FIGS. 9-11, provided along one side of the lip 67 (i.e. the upper surface as shown in FIG. 10) may be a pair of internally-threaded openings 70, 70' used in the hinged attachment of the intermediate section 33 to a corresponding one of the side sections 29, 31 in a manner described below. In the outer surface 66 of the intermediate section 33, and adjacent the ends thereof, may be through-bores 72, 74 for accepting the bolts 34, 36 (FIG. 5) by which the segment 28 is attached to a corresponding cam element 38, see FIGS. 4, 7, 13 & 14.

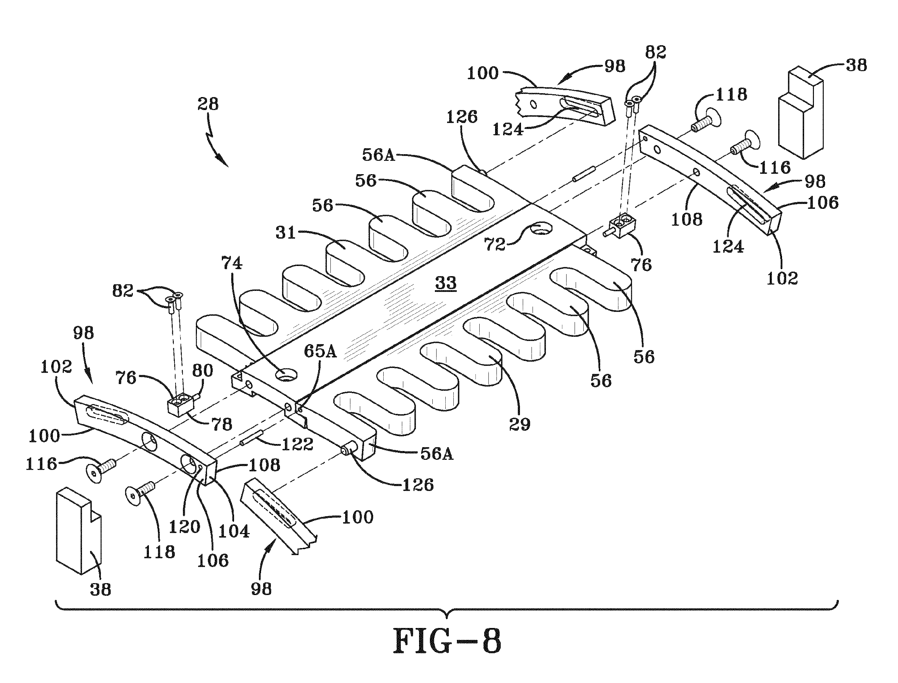

For hingedly securing one end of each side section 29 or 31 to the intermediate section 33 (FIG. 8), a pair of stud members 76, 76' may each have a body 78 and a pin portion 80 projecting from the body. Each stud member 76, 76' may be secured to the intermediate section 33 with screws 82 extending through the body 78 of each member 76, 76' and may be threadably received by the internally-threaded openings 70, 70' (FIG. 9) of the intermediate member 33. Once the stud members 76, 76' are secured to the intermediate section 33 with the screws 82, each side section 29 or 31 may be arranged adjacent a corresponding marginal side edge of the intermediate section 33 so that the lip 62 of the side section 29 or 31 overlies the lip 67 of the corresponding marginal edge and so that the bores 65, 65A in an end of each of the side sections 29 or 31 pivotally accept the pin portion 80 of a corresponding stud member 76, 76'.

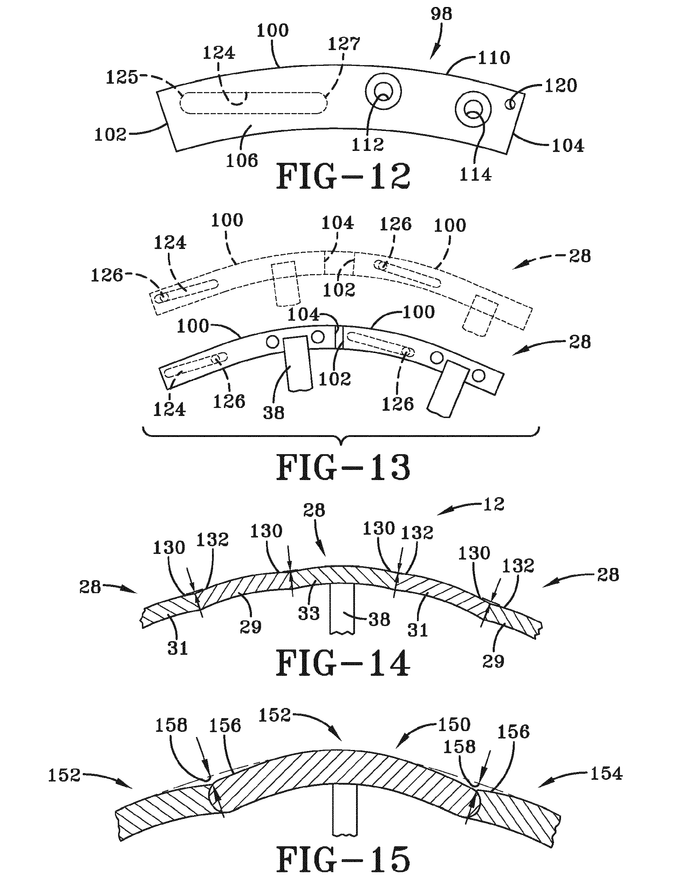

With reference to FIGS. 8, 12 and 13, each segment 28 may also include guide means 98 for coordinating movement of the side sections 29, 31 with those side sections of an adjacent segment 28 as the segments travel radially inward and outward from the drum axis 52. The guide means 98 may include a pair of elongated plates 100 each having two opposite ends 102, 104 and two opposite side faces 106, 108 extending between the two opposite ends 102, 104. As best shown in FIG. 12, each guide plate 100 may be arcuate in shape so that the curvature of its outer surface 110 corresponds with that of the outer surfaces 61, 63, 66 of the segment sections 29, 31 and 33. Two through-openings 112, 114 may extend between the faces 106, 108 for receiving the shanks of the bolts 116, 118 (FIG. 8) used to attach the guide plate 100 to a corresponding end of the intermediate section 33.

A through-bore 120 may extend between the faces 106, 108 at a location adjacent the end 104. One end of a pin 122 (FIG. 8) may be fixed within the through-bore 120, and the other end of the pin 122 may be loosely received by the bore 65A in the side face of the outermost finger 56A of the side section 29. With one end of each side section 29 or 31 being secured to the intermediate section 33 by a stud member 76 and the other end of each side section 29 or 31 being secured to the intermediate section 33 by way of the guide plate 100 and pin 122, each side section 29 or 31 may pivotally attach to the intermediate section 33 for hinged movement relative thereto about a pivot axis 90 or 92 between its position shown in solid lines in FIG. 11 and its position shown in phantom in FIG. 11. Accordingly, the diameter of each bore 65 or 65A may be slightly larger than the diameter of the corresponding pin portion 80 or pin 122 accepted thereby. When each segment 28 is secured to its cam element 38 (FIG. 5) in its operative position about the B&T drum 12, each axis 90 or 92 about which the side section 29 or 31 pivots may be substantially parallel to the drum axis 52.

With reference again to FIGS. 8 and 12, each guide plate 100 may also have an elongated slot 124 defined by each guide plate so as to extend substantially linearly along its side face 108. As best shown in FIG. 12, the end 125 of the slot 124 situated adjacent the plate end 102 may be closer to the outer surface 110 of the guide plate 100 than the opposite end 127 of the slot 124 thereby orienting the slot at an angle with respect to a radius of the B&T drum 12. As each segment 28 is moved radially toward or away from the drum axis 52, the side sections 29, 31 of an adjacent segment 28 may pivot relative to their corresponding intermediate section 33 by a predetermined and fixed amount. To this end and with reference again to FIGS. 8 and 13, one end of a pin 126 may be fixedly received in the outermost finger 56A of each side section 29 or 31 adjacent the tip thereof, and the other end of the pin 126 may be loosely received in the slot 124 of a guide plate 100 of an adjacent segment 28. Thus, as the intermediate section 33 of each segment 28 is moved radially toward or away from the drum axis 52, the pin 126 may be guided along the slot 124. Alternatively, the guide plate 100 may be provided with a curved outer surface engaged by the pin 126 of an adjacent side section 29, 31 in the nature of a cam and cam follower.

As the segments 28 are moved radially toward and away from the drum axis 52 between, for example, the position illustrated in solid lines in FIG. 13 and the position illustrated in phantom in FIG. 13, the guide plates 100 of adjacent segments 28 may move closer together or further apart. As the guide plates 100 are moved relative to one another in this manner, each pin 126 (to which a side section 29 or 31 is secured) may slide along its corresponding slot 124 from one end 125 of the slot to the opposite end 127 of the slot.

Since the slot 124 is oriented as described above (e.g., so that one of its ends is situated closer to the outer surface 110 than is the other end), the side section 29 or 31 of the adjacent segment 28 may hingedly move relative to its intermediate section 33 about the pivot axis 90 or 92 as the intermediate section is moved toward and away from the drum axis 52. In other words, as the intermediate section 33 of one segment 28 is moved radially outwardly of the drum axis 52, the side sections 29 and 31 of the one segment 28 are hingedly moved by the guide plates 100 of an adjacent segment 28 relative to the intermediate section from, for example, the solid line position shown in FIG. 11 toward the position shown in phantom in FIG. 11. Conversely, as the intermediate section 33 of one segment 28 is moved radially toward the drum axis 52, the side sections 29 or 31 of the one segment 28 may hingedly move by the guide plates 100 of an adjacent segment 28 relative to the intermediate section 33 from, for example, the FIG. 11 phantom-line position toward the FIG. 11 solid-line position.

The multi-sectioned segments 28 and the guide plates 100 produce an improvement when comparing the circumferential surface of the B&T drum 12 to that of a conventional drum having segments comprised of only a single section. For example, there is illustrated in FIG. 14 a cross-sectional view of a portion of the B&T drum 12 with its multi-sectioned segments 28 collectively defining a segment of an arc of the drum circumference, e.g. an arc whose segment spans an angle of thirty-six degrees about the drum axis 52. As shown in FIG. 14, transitional regions 130 between the outwardmost portions of the arcuate surfaces provided by the sections 29, 31, 33 and the sections 29, 31 of an adjacent segment 28 at which the surface of the B&T drum 12 may be continuous. The distance that each of these flat regions or "spots" 130 are spaced from the outermost drum circumference (i.e. the effective circumference of the B&T drum 12 for tire-building purposes) is indicated 132.

By comparison, there is illustrated in FIG. 15 a portion of a conventional drum 150 having an arcuate segment 152 wherein each segment 152 is comprised of a single section 154 whose arcuate surface generally spans about the same arc (e.g. an arc whose segment spans thirty-six degrees about the longitudinal axis of the B&T drum) as does that of each segment 28 of the FIG. 14 B&T drum 12. In FIG. 15, the circumferential surface of the drum 150 has relatively flat regions, or "spots" 156, of transition between the outermost portions of the surfaces of adjacent segments 152. Also, the distance, indicated at 158, at which each flat spot 156 is spaced from its outermost drum circumference is considerably larger than the distance 132 at which each dip 130 (FIG. 14) is spaced from its outermost drum circumference. Because the flat spots 156 of the FIG. 15 drum are appreciably deeper than those of the FIG. 14 B&T drum 12, and the magnitude of this depth is responsible for a large radial runout when a tire is constructed on the FIG. 15 drum at its larger diameter settings, the FIG. 14 B&T drum 12 provides an appreciably smoother circumference. Thus, a tire constructed about the FIG. 14 B&T drum 12 is less likely to be adversely affected by its flat spots and out-of-round condition than is a tire constructed about the FIG. 15 drum.

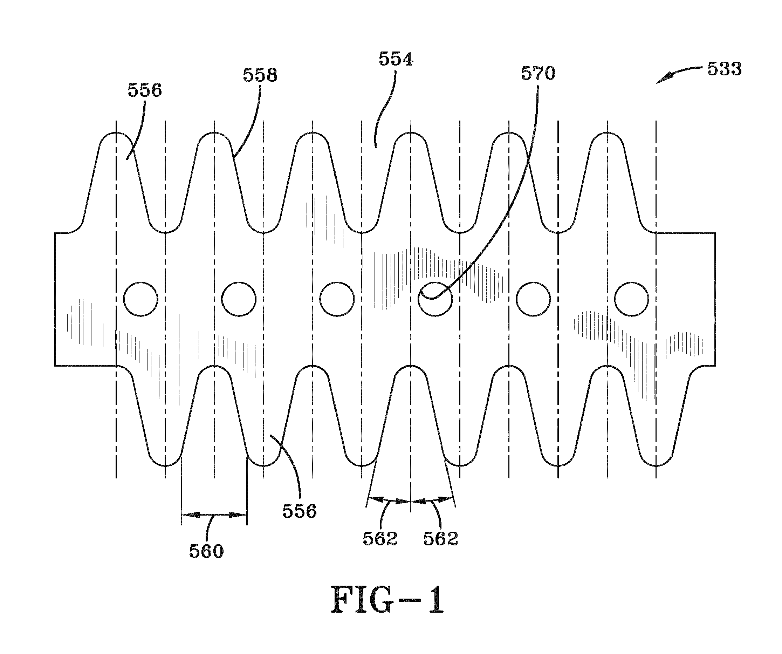

Thus, for example, by modifying a drum with ten single-sectioned segments supported about its longitudinal axis so that each of its segments includes three hinged sections, e. g., two sides and an intermediate section, the modified drum may have a total of thirty surface-defining sections, rather than ten segments, which collectively cooperate to reduce the out-of-round condition of the B&T drum 12, especially at the larger diameter settings. Such a thirty-section drum (comparable in construction with that of the B&T drum 12 of FIGS. 1-14) may have a circumferential working range of about 60.0 inches to 83.50 inches, with an optimum circumference of about 60.0 inches. Measurements of radial runout of tires constructed with the thirty-section B&T drum 12 at a working radius of about 82.20 inches (at which the out-of-roundness of the B&T drum would be at its greatest) may show only a 0.040 inch to 0.050 inch variation per segment 28 whereas measurements of runout of tires constructed with a comparable conventional drum whose segments are comprised of a single section and at a working radius of about 80.9 inches (at which the out-of-roundness of the conventional drum would be at about its greatest) showed a 0.070 inch to 0.100 inch variation per segment.

The foregoing detailed description of the B&T drum 12 is for the purpose of example illustration and not limitation. It should be recognized that a B&T drum 12 in accordance with the present invention could be made with numerous modifications, substitutions, deletions, and additions without departing from the spirit and scope of the claims as set forth hereinafter.

For example, whereas there is described herein a "three-sectioned" segment that provides thirty sections which define the outer circumference of the B&T drum 12, it is to be recognized that in accordance with one aspect of the present invention, each segment may comprise only two sections hingedly connected as by a hinge rod about a common hinge line.

With reference to FIGS. 19 and 20, there is depicted such an alternative example of a multi-sectional segment 28 in accordance with the present invention wherein the intermediate section of the alternative segment 28" has substituted therefor a pair of hinge pins 162, 164 fixedly mounted in respective guide plates 100". These pins 162, 164 may project from their respective guide plates inwardly of the segment 28" to pivotally receive thereon pin mounts 166, 168, 170, 172 threaded into respective bores 174, 176, 178, 180 in the side edge of first and second side sections 29", 31 ". These side sections 29", 31" may be otherwise identical to the side sections 29, 31 described above. In this example, as noted, the side sections 29", 31" may be hingedly supported by the guide plates. In turn, these guide plates may be mounted directly to a respective underlying supporting cam (not shown in FIG. 19). Further, the interconnection of the side-sections 29", 31" of this alternative example with the side sections of adjacent segments may also be identical to the interconnection heretofore described and shown in FIGS. 8-15.

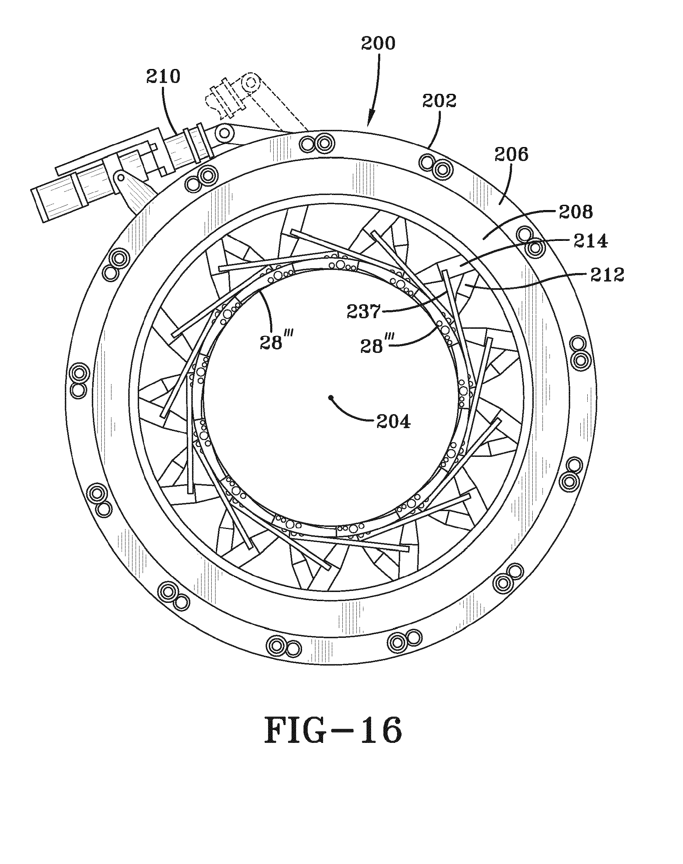

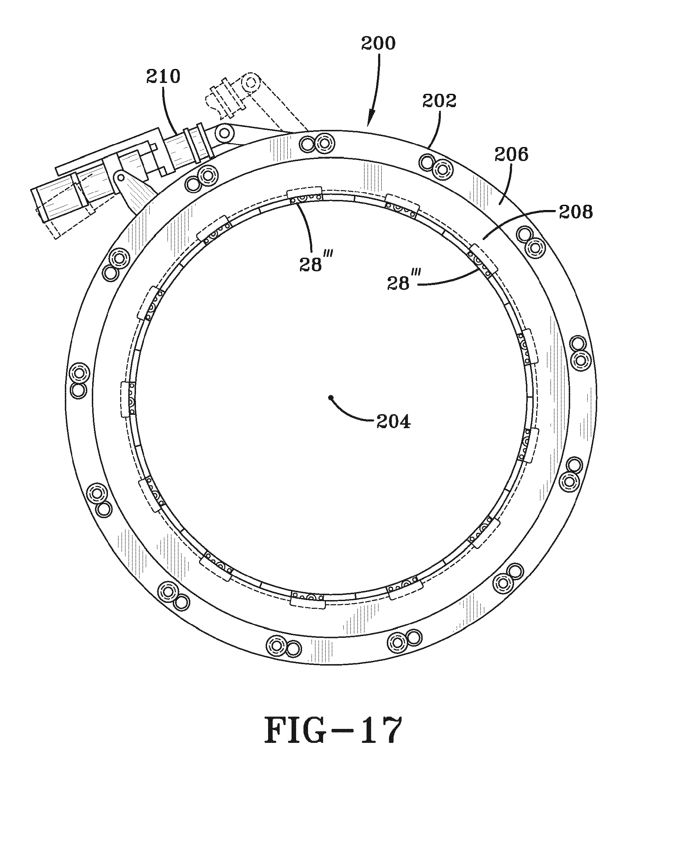

With reference to FIGS. 16-18, one example of the present invention may take the form of a transfer ring 200 that includes a circular frame 202 having a central axis 204. This frame 202 may include an outer ring 206 of a "U"-shaped cross section and an inner ring 208 rotatable within the outer ring. Rotation of the rings relative to one another may be actuated by piston-cylinder means 210. The frame 202 may serve as the mounting for a plurality of multi-sectional segments 28"' movable radially inwardly and outwardly relative to the central axis. Mounting of the segments for radial movement may be by means of a plurality of lever arms 212, 214 connected at one of their respective ends to the intermediate section 33"' of a multi-sectional segment 28'" and at their opposite respective ends to the inner ring 208 of the frame 202. Through rotation of the inner ring 208 relative to the outer ring 206 of the frame 202, the segments are caused to move radially inwardly or outwardly from the central axis of the frame.

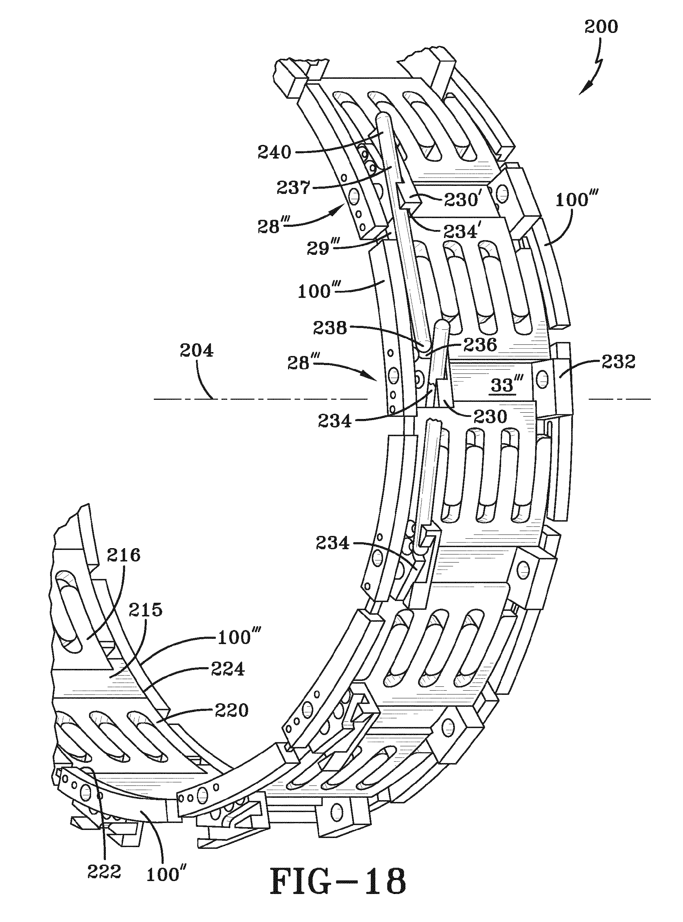

With specific reference to FIG. 18, there is depicted a plurality of multi-sectional segments 28'" substantially identical to the multi-section segments 28 described hereinabove, but with the difference that the segments 28'" are designed with respective concave arcuate surfaces 216, 215, 220 collectively defining an inner circumference of the transfer ring, as opposed to the convex arcuate surfaces of the segments 28 of the B&T drum. Each segment 28'" may include an intermediate section 33"' and two flanking side sections 29"', 31"' Each intermediate section of segment may include a guide plate 100"' fixedly attached to one of its ends 222 and a further guide plate 100'" fixedly attached to the other of its ends 224. These guide plates 100'" may interconnect the side sections 29"', 31'" of adjacent segments to the intermediate section 33"' of the first segment 28"'. As also described above, each of the side sections 29'", 31'" of a segment 28'" may be hingedly mounted to their respective intermediate section 33"'. This hinged mounting of the side sections 29"', 31'" to their respective intermediate section and the interconnection of adjacent side sections of adjacent segments may hingedly rotate the side sections about their respective hinge mounted axis, as the several segments move radially inwardly or outwardly with respect to the central axis 204 of the B&T drum.

Mounting blocks 230, 232 may be secured to the opposite ends of each intermediate section 33"' for receiving the connecting ends of the lever arms 212, 214 for mounting the segment to the frame 202 for radial movement of the several segments inwardly and outwardly relative to the central axis 204. Each mounting block 230, 232 may include first and second respective guide grooves 234, 236. A rigid guide rod 237 having one end 238 thereof anchored in the first guide groove 236 may extend therefrom such that its opposite end 240 is slidably received in the second groove 234' of the guide block 230' of an adjacent segment. As the segments move radially inwardly or outwardly, the end 240 of the guide rod 237 may slide within its respective groove 234 thereby maintaining constant relative rotational positioning of the several segments 28"'.

The example depicted in FIGS. 16-18 may comprise a transfer ring for grasping a completed B&T package after its completion and release from the B&T drum 12 by engaging the outer circumference of the package with the inner arcuate surfaces of the segments of the transfer ring. This engagement of the "shoes" (e. g., segments) of the transfer ring and the outer circumferential surface of the B&T package must be effected very carefully to avoid developing indentations in the package by the shoes. Such indentations may show up later as imperfections in a finished vehicle tire.

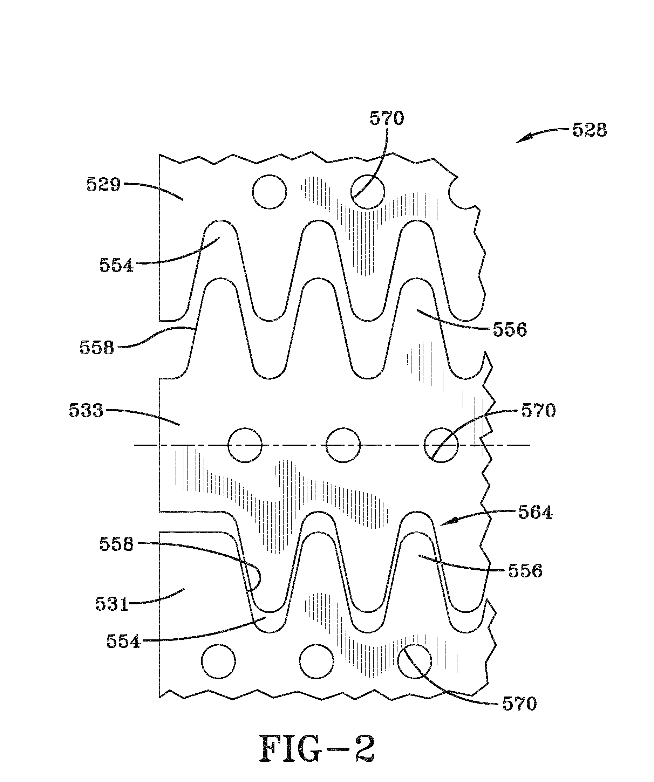

As shown in FIGS. 1-2, an intermediate section 533 of a segment 528 in accordance with the present invention may include fingers 556 and gaps 554. The fingers 556 from the intermediate section 533 of one segment 528 may mesh with the gaps 554 of an adjacent segment 528. The fingers 556 of the intermediate section 533 may be tapered at a taper angle 562 as the fingers extend toward side sections 529, 531 meshing with tapered surfaces 558 of tapered gaps 554 also tapered at the taper angle 562. A maximum width of the fingers 556 and the matching gaps 554 may be 6.0 mm. This pattern may continue over an entire width of a segment 528, which may be 450.0 mm wide or more (FIG. 2).

The segments 528 may be constructed of aluminum or other suitable material and may include a row of magnets 570 circumferentially between the gaps 554 and fingers 556 for holding steel breaker material added to the B&T drum 12 during tire building operations. The magnetic pattern of each segment 528 may be altered by removing some or all of the magnets 570 and replacing the magnets with blank steel plugs at each segment hole.

Such segments 528 may produce minimal drum runout over the entire working range of diameters that the B&T drum 12 may achieve. Thus, rotating the drum segments 528 at different diametral positions may minimize out-of-roundness of the B&T drum 12. This minimal runout (typically less than 0.010" over the entire drum) may minimize noise effects in pneumatic tires built with gear pump or strip laminated applied treads. Tire building on automatic or semi-automatic machines, such as components applied by lamination, gear pump, fusion, or other method, may be conducted on the B&T drum 12 from strips of warm or hot rubber.

The tapered fingers 556 and gaps 554 may eliminate the need for application of release coating conventionally used to reducing sticking when the B&T drum 12 radially expands and contracts for building pneumatic tire of varying sizes. This release coating may be expensive and it may wear away over time, requiring reapplication of the coating (e.g., drum down time). When pneumatic tires with a "mini-wing" construction are built on a conventional B&T drum, a gear pump may apply the mini-wing directly to the B&T drum segment 528 (not on a breaker package that had been previously applied to the B&T drum). Sticking of the mini-wing compound as the B&T drum collapses, may also be mitigated by the tapered fingers 556 and gaps 554. The tapered fingers 556 and gaps 554 may allow the segments 528 to operate with hot rubber applied directly to the B&T drum 12 without the need for the release coating while still providing good release properties for the finished B&T tire components.

## Claims

1. An apparatus for use in the manufacture of a pneumatic tire, the apparatus comprising a longitudinal axis and a plurality of arcuate segments defining an arc of a cylindrical surface such that the arcuate segments collectively define the cylindrical surface and the arcuate segments are supported for movement radially relative to the longitudinal axis for adjusting the circumference of the cylindrical surface, each arcuate segment including at least one of two side sections of each arcuate segment having a row of spaced fingers corresponding in a fitted arrangement with gaps of an adjacent arcuate segment such that, as the circumference is adjusted and the side sections of each segment hingedly move relative to an intermediate section about a corresponding pivot axis, the fingers move into and out of the gaps provided between the fingers of the adjacent arcuate segment, the fingers and gaps both being tapered at a taper angle relative to the circumferential direction of the apparatus.

2. The apparatus in accordance with claim 1 defining a variable circumference for building a pneumatic tire, the apparatus comprising a cylindrical frame having a central axis of rotation, and a plurality of multi-sectional arcuate segments mounted to the frame in side-by-side relationship about the central axis thereof, the arcuate segments being radially movable inwardly and outwardly with respect to the central axis of the frame and including arcuate surfaces which move toward one another when the arcuate segments are moved radially inwardly and away from one another when the arcuate segments are moved radially outwardly to collectively define a circumference.

3. The apparatus as set forth in claim 1 or 2 wherein each arcuate segment includes an intermediate section and circumferentially adjacent first and second side sections flanking the intermediate section on respective ones of the opposite sides thereof, each of the first and second side sections being pivotally mounted to the frame for hinged movement of each side section with respect to the corresponding intermediate section.

4. The apparatus as set forth in claim 3 wherein opposite ends of the intermediate section of a first arcuate segment are secured by guide structures, a guide structure at one end of the intermediate section extending therefrom in the direction of a side section of a second arcuate segment adjacent to the first arcuate segment, a guide structure on the opposite end of the intermediate section extending therefrom in the direction of a side section of a third arcuate segment adjacent to the opposite side of the intermediate section, and a radial movement of the intermediate section of the first arcuate segment being converted into hinged movement of the side sections of second and third arcuate segments.

5. The apparatus as set forth in at least one of the previous claims wherein the taper angle is between 10°and 40°.

6. The apparatus as set forth in at least one of the previous claims wherein the arcuate segments are constructed of aluminum.

7. The apparatus as set forth in claim 5 wherein the taper angle is between 20°and 30°.

8. The apparatus as set forth in claim 5 wherein the taper angle is between 10°and 20°.

9. The apparatus as set forth in claim 5 wherein the taper angle is between 30°and 40°.

10. The apparatus as set forth in at least one of the previous claims further including magnets for facilitating tire building operations on the apparatus.

11. The apparatus as set forth in at least one of the previous claims wherein each of the guide structures includes a curved surface thereon and a pin means slidably engaging the curved surface of a respective guide structure, the curved surface being of a selected curvature which causes the side sections to pivot about their respective hinged mountings as the arcuate segments move toward or away from one another during radial movement thereof.

12. The apparatus as set forth in at least one of the previous claims wherein one section of each arcuate segment includes a slot and a pin, the slot slidably receives the pin such that, as the arcuate segments are moved radially relative to the longitudinal axis of the apparatus, the movement of the one section of an adjacent arcuate segment is coordinated with movement of the pin and slot.
